# EUROPÄISCHE PATENTSCHRIFT

(11) **EP 2 872 776 B1**
(45) Veröffentlichungstag und Bekanntmachung des Hinweises auf die Patenterteilung: **26.09.2018**
(21) Anmeldenummer: 13737141.5
(22) Anmeldetag: 10.07.2013
(51) Int. Cl.: F03D 80/00

(54) **WINDENERGIEANLAGE MIT EINEM PITCHVERSTELLSYSTEM**
WIND TURBINE COMPRISING A PITCH ADJUSTMENT SYSTEM
ÉOLIENNE POURVUE D'UN SYSTÈME DE CALAGE DE PALE

(30) Priorität: 11.07.2012 DE 102012013767
(43) Veröffentlichungstag der Anmeldung: 20.05.2015
(73) Patentinhaber: Liebherr-Components Biberach GmbH, 88400 Biberach an der Riß (DE)
(72) Erfinder: GAILE, Anton, 88299 Leutkirch (DE); STAIMER, Anton, 87727 Babenhausen (DE); WENNHELLER, Oliver, 88299 Leutkirch (DE); LAVERGNE, Hans-Peter, 87779 Trunkelsberg (DE)
(74) Vertreter: Laufhütte, Dieter
(86) Internationale Anmeldenummer: PCT/EP2013/002035
(87) Internationale Veröffentlichungsnummer: WO 2014/009011

(56) Entgegenhaltungen:
- EP-A1- 1 306 558
- EP-A1- 1 306 560
- WO-A1-99/60273
- WO-A1-2009/064264
- DE-A1- 2 252 935
- DE-U1-202005 018 038
- DE-U1-202007 006 789
- FR-A1- 2 146 333
- GB-A- 1 374 752
- US-A- 2 856 960
- US-A- 3 698 432
- US-A- 3 903 698

## Beschreibung

Die vorliegende Erfindung betrifft eine Windenergieanlage mit einem Pitchverstellsystem zur Verstellung wenigstens eines Rotorflügels der Windenergieanlage sowie ein Pitchverstellsystem für eine Windenergieanlage.

Die Rotorblattverstellung von Windenergieanlagen wird auch Pitchverstellsystem genannt. Die Rotorblattverstellung in einer Windenergieanlage (WEA) dient dabei zur Drehzahlregulierung des Rotors bei steigenden Windgeschwindigkeiten. Wird die sogenannte Nennwindgeschwindigkeit überschritten, werden die Rotorblätter über eine Steuerlogik aus dem Wind gedreht bzw. gepitcht. Der maximale Schwenkwinkel liegt dabei bei ca. 90°, was der sogenannten Fahnenstellung entspricht. Diese wird bei Erreichen der Abschaltgeschwindigkeit zum Anhalten des Rotors genutzt. Windenergieanlagen sind in der Regel mit drei Rotorblättern ausgeführt, wobei jedes Rotorblatt mit einem Verstellsystem ausgestattet ist. Man spricht hierbei auch von einer sogenannten Einzelrotorblattverstellung.

Derzeitige Pitchsysteme sind in der Regel hydraulische Systeme oder elektrische Systeme.

Bei hydraulischen Pitchverstellsystemen weist der Rotorflügel ein unverzahntes Blattlager auf, das mit einem hydraulischen Schwenkzylinder verschwenkt werden kann. Die vom hydraulischen Schwenkzylinder erzeugte Axialbewegung wird über eine an dem Großwälzlager bzw. Blattlager montierte Anlenkplatte in eine Rotationsbewegung eines Lagerteils und damit des Rotors übertragen. Die elektrische Energie für die Ansteuerung des hydraulischen Schwenkzylinders wird über Schleifringkörper aus dem Maschinenhaus in den Rotor übertragen. Zudem sind Drehdurchführungen im Einsatz, über die die hydraulische Energie aus dem Maschinenhaus mit dem dort zentral angeordneten hydraulischen Aggregat in den Rotor übertragen werden können.

Infolge der hydraulischen Verstellung werden die Zahneingriffe vollständig eliminiert, was allerdings bei bestehenden Hydrauliksystemen heute schon der Fall ist. Der Nachteil besteht im zentralen Hydrauliksystem im Maschinenhaus der Windenergieanlage und des daraus resultierenden Versorgungsstranges in den Rotor hinein. Die Schnittstelle zwischen Maschinenhaus und Rotor muß mit aufwendigen Drehdurchführungen ausgeführt werden. So muß die Hydraulikversorgung durch das gesamte Hauptgetriebe hindurch geführt werden, was entsprechend aufwendige Hohlwellen unabdingbar macht.

Bei den bekannten elektrischen Systemen werden außen- oder innenverzahnte Blattlager in Kombination mit einem Schwenkantrieb eingesetzt. Dabei gibt es auch Lösungen, bei denen die Verzahnung durch Riementriebe ersetzt wird. Das von einem Elektromotor erzeugte Drehmoment wird über ein Planetengetriebe mit einem Antriebsritzel auf die Verzahnung des Blattlagers des Rotorflügels übertragen, wodurch eine Schwenkbewegung des Rotorflügels herbeigeführt wird. Der Elektromotor wird in den Rotor elektrisch angeschlossen. Die elektrische Energie wird sodann über Schleifringkörper aus dem Maschinenhaus in den Rotor übertragen.

Allerdings ist bei elektrischen Systemen auf Basis einer Verstellung über Drehantriebe aufgrund nur geringer Verstellwinkel immer wieder das Problem hinsichtlich der Verschleißbildung an der Verzahnung aufgetreten, was insbesondere in der sogenannten 0°-Position, also dem Stellbereich zwischen Einschalt- und Nennwindgeschwindigkeit besteht.

Aus der WO 2009/064264 ist bereits eine Windenergieanlage bekannt, die ein Pitchverstellsystem mit einem elektrohydraulischen Antrieb aufweist, wobei die Komponenten des elektrohydraulischen Antriebs in dem Rotor der Windenergieanlage angeordnet sind. Durch die Anordnung des elektrohydraulischen Antriebs in der Nabe bzw. dem Rotor kann auf eine hydraulische Durchführung durch die Drehverbindung zwischen der Nabe bzw. dem Rotor und der Gondel verzichtet werden. Der elektrische Motor in dieser bekannten elektrohydraulischen Anordnung ist geregelt bzw. gesteuert, so daß in Abhängigkeit von der Motorregelung bzw. - steuerung der Volumenstrom des Hydraulikfluids einstellbar ist. Des weiteren weist diese vorbekannte Windenergieanlage bereits einen Hydraulikspeicher auf, über den im Fehlerfall das System die Rotorflügel in eine sichere Position gebracht wird.

Die derzeitigen elektromechanischen Verstellsysteme nach dem Stand der Technik und die vorgenannten elektrohydraulischen Aktuatoren benötigen eine kostspielige Leistungselektronik. In den zur Verfügung stehenden Anlagen ist bisher auch noch keine kompakte Lösung realisiert, welche über alle notwendigen Funktionen, wie Regelbetrieb, Notauspitchen bei Stromausfall und mechanischer Verriegelung in sicherer Position verfügt.

Es ist daher die Aufgabe der vorliegenden Erfindung, eine Windenergieanlage der eingangs genannten Art in vorteilhafter Weise weiterzubilden, insbesondere dahingehend, daß eine Windenergieanlage ohne aufwendige Leistungselektronik mit einem kompakten und funktionssicheren Pitchsystem ausgestattet wird.

Diese Aufgabe wird erfindungsgemäß gelöst durch eine Windenergieanlage mit den Merkmalen des Anspruches 1. Darin ist vorgesehen, daß eine Windenergieanlage mit wenigstens einem Pitchverstellsystem zur Verstellung des Pitches wenigstens eines Rotorflügels der Windenergieanlage bereitgestellt wird, wobei das Pitchverstellsystem wenigstens einen elektrohydraulischen Antrieb mit wenigstens einem Hydraulikzylinder, wenigstens einem Hydraulikspeicher, wenigstens einem Verstellventil, wenigstens einer Elektromotor-Pumpeneinheit und wenigstens einer Steuereinheit aufweist, bei dem mindestens die hydraulischen Bauteile, einschließlich des mindestens einen Hydraulikzylinders und des mindestens einen Hydraulikspeichers, in einem Gerät zusammengefasst sind und in dem oder am Rotor der Windenenergieanlage angeordnet sind, wobei der elektrohydraulische Antrieb zur Druckerzeugung zumindest einen in eine Drehrichtung drehenden ungeregelten Elektromotor aufweist.

Vorteilhaft kann der ungeregelte Elektromotor mit nur einer Drehrichtung eine oder mehrere Pumpen antreiben. Die Verwendung mehrerer Pumpen ermöglicht dabei eine Aktuatorverstellung mit unterschiedlichen Verstellgeschwindigkeiten, wodurch das Motorantriebsmoment bei hohen Lasten reduziert werden kann.

Bevorzugte Ausgestaltungen der Erfindung ergeben sich durch die sich an den Hauptanspruch anschließenden Unteransprüchen.

Demnach kann der Hydraulikzylinder des elektrohydraulischen Antriebs eine Verriegelung derart aufweisen, daß mindestens ein Verriegelungsbolzen in mindestens eine Vertiefung in der Kolbenstange eingreift. Aufgrund dieser Verriegelung in der Kolbenstange kann auf die sonst üblichen externen Verriegelungen verzichtet werden. Der mindestens eine Verriegelungsbolzen kann vorteilhaft mit einem Positionserkennungssystem zur Erfassung seiner Lage versehen werden.

Gemäß einer anderen vorteilhaften Ausgestaltung der Erfindung ist der Mechanismus zum Lösen der Verriegelung derart direkt mit dem Druck eines Hydraulikspeichers gekoppelt, daß das Lösen der Verriegelung nur dann erfolgt, wenn der Hydraulikspeicher auf einem vorgegebenen Druck aufgeladen ist. Hierdurch kann auch auf ein zusätzliches Ventil verzichtet werden.

Zur Regelung unterschiedlicher Verstellgeschwindigkeiten können mindestens zwei von einem Motor angetriebene Pumpen vorgesehen sein, die über schaltbare Bypassventile zu- bzw. abschaltbar sind.

Die mindestens eine weitere Pumpe kann nur dann zugeschaltet werden, wenn die anliegende äußere Last unter einem vorgegebenen Schwellwert liegt.

Ganz besonders bevorzugt ist beim Verfahren des Stellzylinders eine Zylinderkammer mit der Pumpe verbunden, während die andere Zylinderkammer mit einem Reservoir verbunden ist.

Ein besonderer Vorteil ergibt sich bei der vorliegenden Erfindung, wenn mindestens ein Speicher zum Verfahren des mindestens einen Flügels in eine sichere Stellung auf ein gegenüber dem Druckniveau des Hydrauliksystems erhöhten Druck aufgeladen ist. Hierdurch wird ein Fail-Safe System geschaffen, so daß auch im Falle des Ausfalles der im Maschinenraum vorhandenen Steuer- und Energieversorgungseinheit das Pitchsystem betätigt werden kann, um die Rotorflügel aus dem Wind zu drehen.

Eine besonders kompakte Bauform des elektrohydraulischen Aktuator ergibt sich, wenn alle hydraulischen Bauteile auf einer zentralen Ventilplatte angeordnet sind oder zumindest über diese miteinander verbunden sind.

Vorteilhaft können sowohl der Elektromotor wie auch die Hydraulikpumpe im vorgespannten Tank des Hydraulikspeichers eingebaut sein. Dadurch kann der Motor fluidgekühlt werden und insgesamt kleiner bauen.

Gemäß einer anderen Ausgestaltung der Erfindung ist am elektrohydraulischen Aktuator bodenseitig ein zusätzliches Stützlager mit geringer Steifigkeit derart ausgebildet, daß die Axialkräfte des Hydraulikzylinders des Aktuators über das Hauptlager in die Nabenstruktur eingeleitet werden, wobei das zusätzliche Stützlager nur die Komponenten der Gewichts- und/oder Massenkräfte aufnimmt, die ein Drehmoment um die Achse des Hydraulikzylinders hervorrufen.

Die Windenergieanlage kann wenigstens zwei Rotorflügel aufweisen, die an der Rotor angeordnet sind. Dabei kann jedem Rotorflügel jeweils eine hydraulische Verstelleinheit zugeordnet sein.

Die Erfindung betrifft weiterhin ein Pitchverstellsystem für eine Windenergieanlage mit den Pitchverstellsystemmerkmalen nach einem der vorhergehenden Ansprüche.

Weitere Einzelheiten und Vorteile der Erfindung sollen nun anhand eines in der Zeichnung dargestellten Ausführungsbeispiels näher erläutert werden.

Es zeigen:
- Fig. 1:: eine schematische Ansicht der Rotorblattverstellung bei steigender Windstärke in einer ersten Position;
- Fig. 2:: eine schematische Ansicht der Rotorblattverstellung bei steigender Windstärke in zweiter Position;
- Fig. 3:: eine schematische Ansicht auf den oberen Teil einer Windenergieanlage mit einem elektrischen Pitchverstellsystem;
- Fig. 4:: eine schematische Ansicht auf den oberen Teil einer Windenergieanlage mit einem hydraulischen Pitchverstellsystem;
- Fig. 5:: eine schematische Ansicht auf den oberen Teil einer Windenergieanlage mit einem erfindungsgemäßen Pitchverstellsystem;
- Fig. 6:: eine schematische Ansicht einer hydraulischen Verstelleinheit in einer ersten Ausführungsform;
- Fig. 7:: eine schematische Ansicht einer hydraulischen Verstelleinheit in einer zweiten Ausführungsform;
- Fig. 8:: eine erste Anordnungsvariante des Hydraulikzylinders in Bezug auf das Blattlager des Rotorflügels;
- Fig. 9:: eine zweite Anordnungsvariante des Hydraulikzylinders in Bezug auf das Blattlager des Rotorflügels;
- Fig. 10:: eine dritte Anordnungsvariante des Hydraulikzylinders in Bezug auf das Blattlager des Rotorflügels;
- Fig. 11:: eine vierte Anordnungsvariante des Hydraulikzylinders in Bezug auf das Blattlager des Rotorflügels;
- Fig. 12:: ein Hydraulikschema des erfindungsgemäßen elektrohydraulischen Aktuators;
- Fig. 13-Fig. 15:: Details des Hydraulikschemas gemäß Figur 12 zur Erläuterung der Erfindung;
- Fig. 16:: eine perspektivische Darstellung des Aktuators gemäß der vorliegenden Erfindung;
- Fig. 17:: eine Schnittdarstellung durch einen Teil des Aktuators gemäß Figur 16 und
- Fig. 18:: eine weitere Schnittdarstellung durch ein Detail des Aktuators gemäß Figur 16.

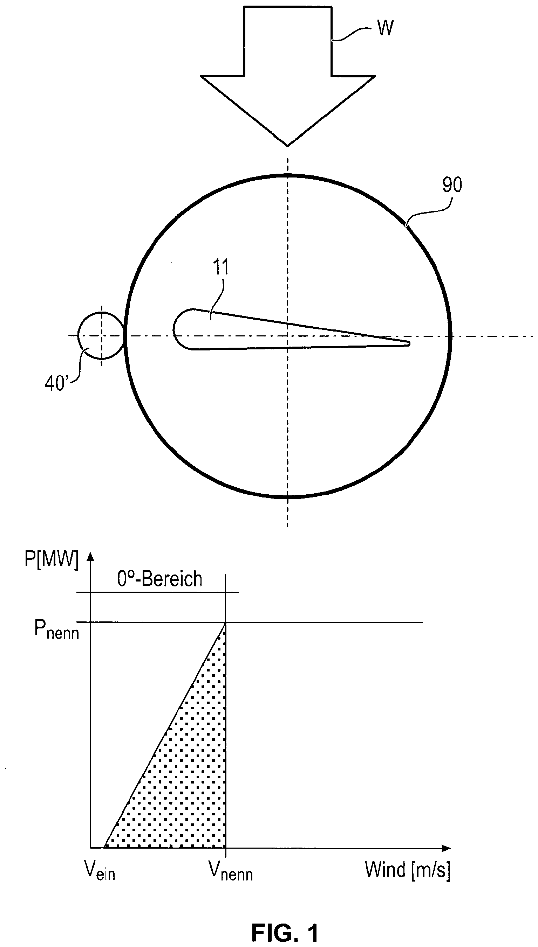

Figur 1 zeigt in schematischer Ansicht die Rotorblattverstellung des Rotorblattes 11 bzw. Rotorflügels 11. In Fig. 1 gezeigt befindet sich der Rotorflügel 11 in einer Stellung, die als 0°-Area bezeichnet wird, wie sich dies aus dem in Fig. 1 enthaltenem Diagramm ergibt. Der Rotorflügel 11 kann mittels der Pitchverstellung 40', die am Blattlager 90 angreift, verstellt werden.

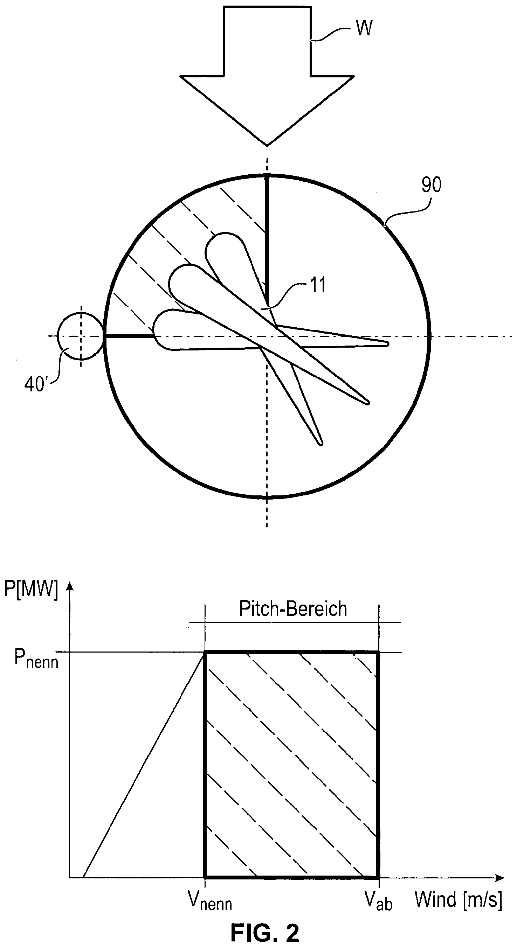

Eine derartige Verstellung bei steigender Windstärke ist sodann in Fig. 2 gezeigt, wobei die sogenannte "Pitch-Area" sowohl im unten in Fig. 2 gezeigten Diagramm als auch in der schematischen Darstellung des Rotorflügels 11 gestrichelt dargestellt ist. Der Wind ist in Figur 1 und 2 mit dem Bezugszeichen W bezeichnet.

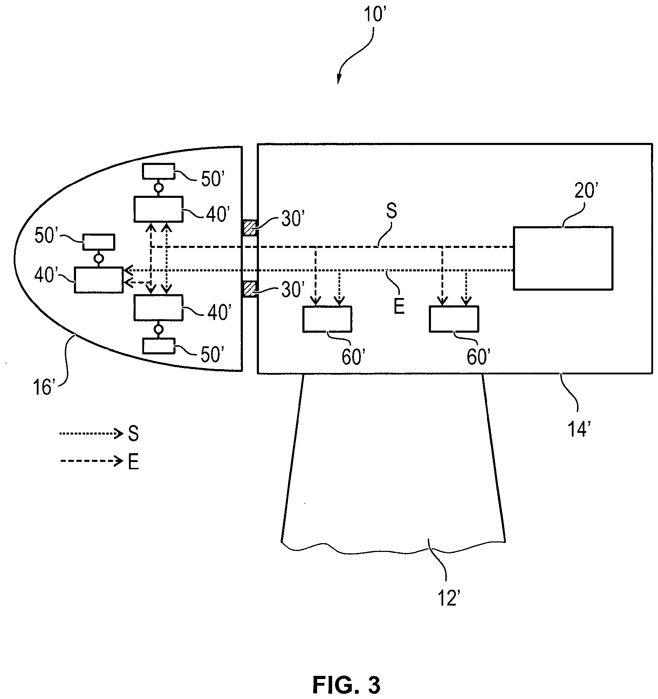

Fig. 3 zeigt eine bekannte Windenergieanlage 10' mit einem elektrischen Pitchverstellungssystem 40'. Dabei ist auf dem Turm 12' das Maschinenhaus 14' der Windenergieanlage 10' montiert. Im Maschinenhaus 14' ist die Anlagensteuerung 20' zentral angeordnet und damit vergleichsweise einfach zugänglich. Mittels der Anlagensteuerung 20' wird sowohl eine Versorgung mit Energie E als auch mit Signalen S zu den Pitchverstellsystemen 40' aber auch zu der Azimutsteuerung 60' bereitgestellt. Die Azimutsteuerung 60' ist dabei im Maschinenhaus 14' bodenseitig angeordnet und erlaubt eine Nachführung des Maschinenhauses 14' und dem Rotor 16' entsprechend der Windrichtung.

Die Übertragung der Signale S und der Energie E von der Anlagensteuerung 20' im Maschinenhaus 14' in dem Rotor 16' erfolgt über den Schleifring 30', der es erlaubt auch bei rotierendem Rotor 16' die Versorgung mit Signalen S und Energie E zu gewährleisten. Bei der Pitchverstellung 40' handelt es sich um eine elektrische Pitchverstellung, die als Fail-Safe-System 50' jeweils einen Akku aufweist. Jedem einzelnen Rotorflügel ist eine eigene Pitchverstellung 40' zugeordnet, wobei die Rotorflügel jedoch nicht in Fig. 3 dargestellt sind.

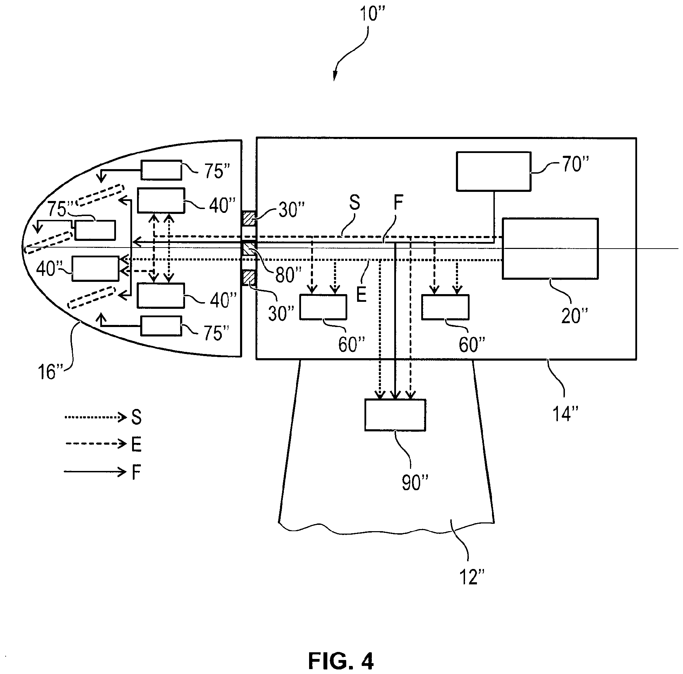

Fig. 4 zeigt eine bekannte Windenergieanlage 10", die vergleichbar der in Fig. 3 gezeigten Windenergieanlage 10' aufgebaut ist. Insbesondere sind vergleichbare Komponenten wie die Anlagensteuerung 20" und die Azimutsteuerung 60" vorhanden. Auch hier ist die Anlagensteuerung 20" in dem Maschinenhaus 14" der Windenergieanlage 10" angeordnet. Mittels der Azimutsteuerungen 60" kann eine Nachführung des Maschinenhauses 14" und dem Rotor 16" entsprechende Windrichtung erfolgen, also eine Relativbewegung gegenüber dem ortsfesten Turm 12" erfolgen. Ferner ist eine Azimut-Bremse 90" vorhanden.

Über den Schleifring 30" werden Energie E und Signale S von der Anlagensteuerung 20" in die in dem Rotor 16" angeordneten Pitchsteuerungen 40" übertragen. Bei diesen Pitchsteuerungen 40" handelt es sich aber um Hydraulik-Aktuatoren, die zusätzlich eine Versorgung mit Hydraulikfluid F benötigen. Hierzu ist ein Hydraulikaggregat 70" im Maschinenhaus 14" zentral angeordnet. Die Hydraulikversorgung mit Hydraulikfluid F erfolgt in diesem Fall über die Drehdurchführung 80", die beispielsweise in Form eines Durchganges wie einer Hohlwelle im Getriebe der Windenergieanlage 10" realisiert sein kann.

Auch hier ist jedem einzelnen Rotorflügel, der nicht näher dargestellt ist, eine Pitchverstellung 40" zugeordnet. Als Fail-Safe-System ist hier ein Druckspeicher 75" vorgesehen, mittels dessen beispielsweise die Rotorflügel 11, die nicht näher dargestellt sind, aus dem Wind gedreht werden können.

Das in Fig. 4 dargestellte System mit einer hydraulischen Pitchverstellung weist den Vorteil auf, daß die einzelnen Pitchverstellsysteme 40" derart beschaffen sein können, daß es genügt, nur ein einziges Steuerventil zu öffnen, um beispielsweise die Rotorflügel aus dem Wind drehen zu können. Allerdings geht als Nachteil einher, daß aufgrund des im Maschinenhaus 14" angeordneten Hydraulikaggregates 70" eine Fluid-Kupplung 80" vorgesehen sein muß, was sehr aufwendig ist.

Eine derartige Fluid-Kupplung 80" ist bei dem in Fig. 3 gezeigten System einer Windenergieanlage 10" nicht erforderlich, da es hier nur eines Schleifringes 30" zur Übertragung von Energie E und Signalen S von der Anlagensteuerung 20" bedarf. Allerdings sind hier die Pitchverstellsysteme 40" wesentlich komplexer aufgebaut, um die erforderliche Genauigkeit und Sicherheit der Pitchverstellung gewährleisten zu können.

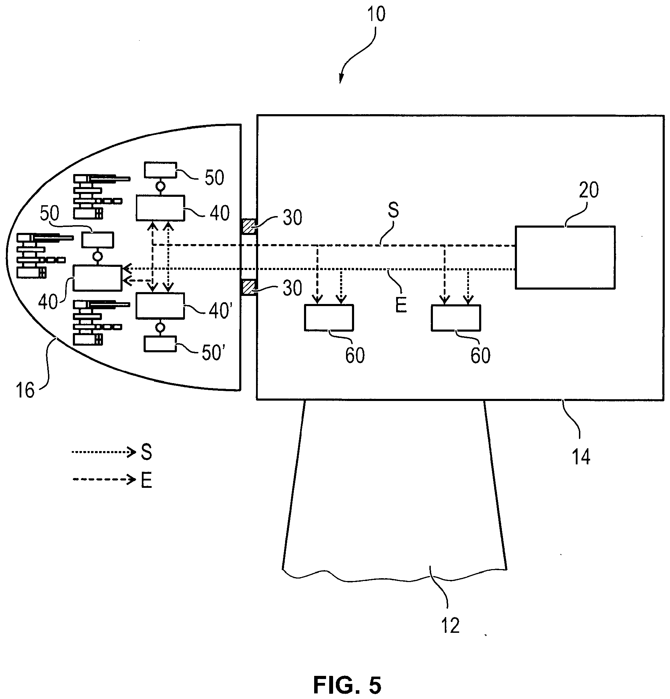

Das in Fig. 5 gezeigte Konzept einer Windenergieanlage 10 gemäß der vorliegenden Erfindung verbindet die Vorteile der bislang bekannten Konzepte einer elektrischen Pitchverstellung 40' gemäß Fig. 3 und einer hydraulischen Pitchverstellung 40" gemäß Fig. 4.

Bei der erfindungsgemäßen Windenergieanlage 10 weist diese ebenfalls einen ortsfesten Turm 12 und ein mittels der Azimutsteuerungen 60 gegenüber dem Turm 12 verdrehbares Maschinenhaus 14 auf. Am Maschinenhaus 14 ist drehbar der Rotor 16 gelagert. Im Maschinenhaus 14 ist ferner die Anlagensteuerung 20 zentral und zugänglich angeordnet, wobei mittels der Anlagensteuerung 20 die Azimutsteuerungen 60 und die hydraulischen Verstelleinheiten 40 des Pitchverstellsystems mit Signalen S und Energie E versorgt werden können. Die Übertragung von Signalen S und Energie E in den Rotor 16 erfolgt über den Schleifring 30. Durch die Aufteilung auf drei dezentrale hydraulische Verstelleinheiten 40, die alle in dem Rotor 16 angeordnet sind, kann auf die zentrale Hydraulikversorgung mittels des Hydraulikaggregates 70", wie dies bei der Windenergieanlage gemäß Fig. 4 der Fall ist, verzichtet werden.

In der Folge ist auch keine Durchführung von Hydraulikleitungen aus dem Maschinenhaus 14 in den Rotor 16 erforderlich. Die hydraulischen Verstelleinheiten 40 werden elektrisch betrieben, d. h. mittels entsprechender Signal- und Energiezuleitungen, die den Schleifring 30 auch umfassen, kann Energie E und Signale S von der Anlagensteuerung 20 zu den jeweiligen hydraulischen Verstelleinheiten 40 des Pitchverstellsystems geleitet werden. Es handelt sich somit um hydraulische Verstelleinheiten 40 des Pitchverstellsystems, die elektrisch betrieben sind bzw. elektrisch angesteuert werden.

Als Fail-Safe-System ist jeder hydraulischen Verstelleinheit 40 jeweils ein Energiespeicher 50 zugeordnet.

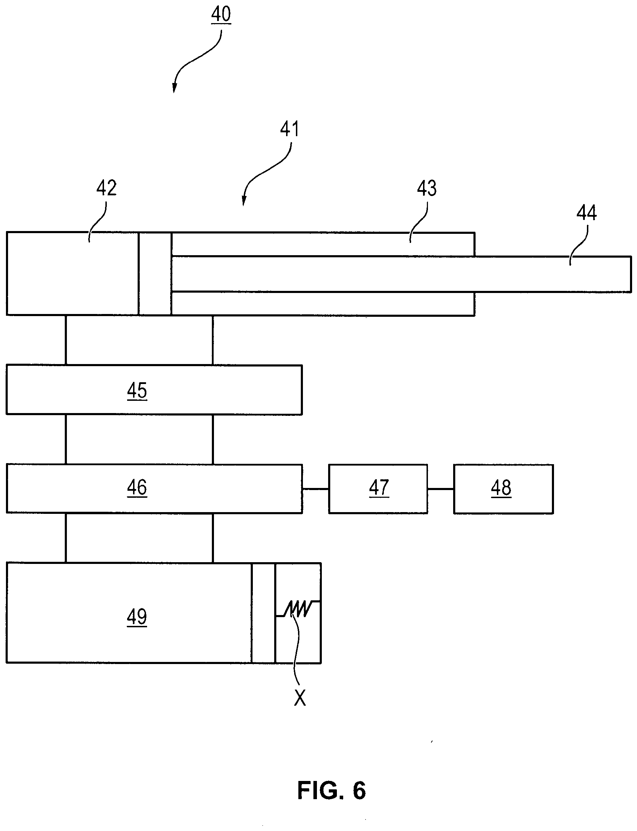

Eine erste Ausführungsform einer derartigen hydraulischen Verstelleinheit 40 ist in Fig. 6 in schematischer Ansicht gezeigt. Dabei handelt es sich um eine Ausführungsform mit einem Differentialzylinder 41, der einen Kolbenraum 42 und einen Ringraum 43 aufweist. Mittels der Kolbenstange 44 kann die Verstellung des Rotorflügels 11 erfolgen, was aber nicht näher in Fig. 6 dargestellt ist. Die entsprechende Ansteuerung des Differentialzylinders 41 erfolgt mittels Tank 49 für das Hydraulikfluid, Pumpe 46 und einem Steuerblock mit Ventil 45. Die Pumpe 46 wird dabei mittels eines Motors 47 angetrieben, der über die Steuerung 48 entsprechende Motorsteuersignale erhält. Pumpe 46 und Motor 47 können auch als Elektromotor-Pumpen-Einheit bezeichnet werden. Da der rotierende Rotor 16 keine definierte Betriebslage der hydraulischen Verstelleinheit 40 ermöglicht, ist der Tank 49 in dem in Fig. 6 gezeigten Ausführungsbeispiel mit einer Federkraft bzw. einem Federdruck X beaufschlagt, so daß keine Luft in den Hydraulikkreislauf gelangen kann. Grundsätzlich ist auch denkbar, daß anstelle eines Federdrucks eine Beaufschlagung mit Gasdruck erfolgt.

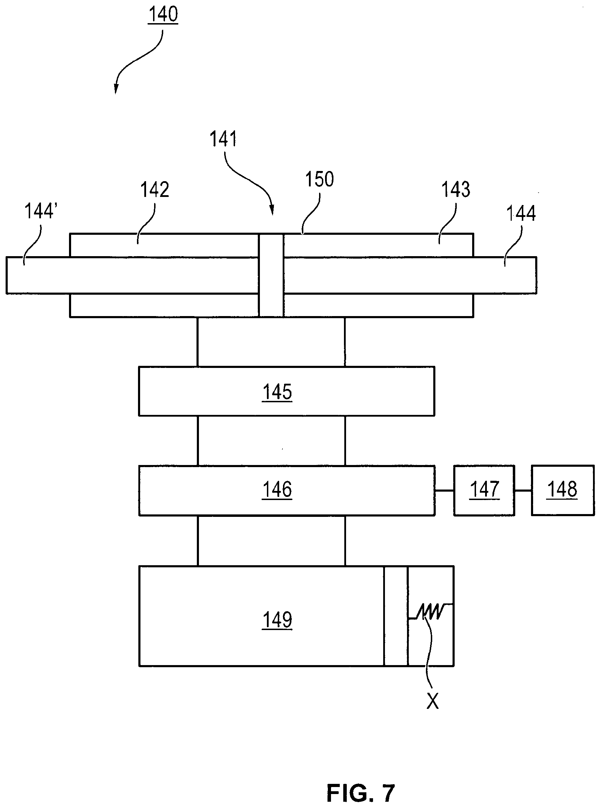

Fig. 7 zeigt ein weiteres Ausführungsbeispiel einer hydraulischen Verstelleinheit 140 eines Pitchverstellsystems gemäß der Erfindung, das beispielsweise anstelle der hydraulischen Verstelleinheit 40 gemäß Fig. 5 eingesetzt werden kann. Es handelt sich bei der hydraulischen Verstelleinheit 140 um eine Verstelleinheit mit einem Gleichgangzylinder 141, der einen ersten Kolbenraum 142 und einen zweiten Kolbenraum 143 aufweist. Je nach Befüllung der Kolbenräume 142, 143 fahren die Kolbenstangenenden 144, 144' entsprechend aus dem Gleichgangzylinder 141 ein bzw. aus.

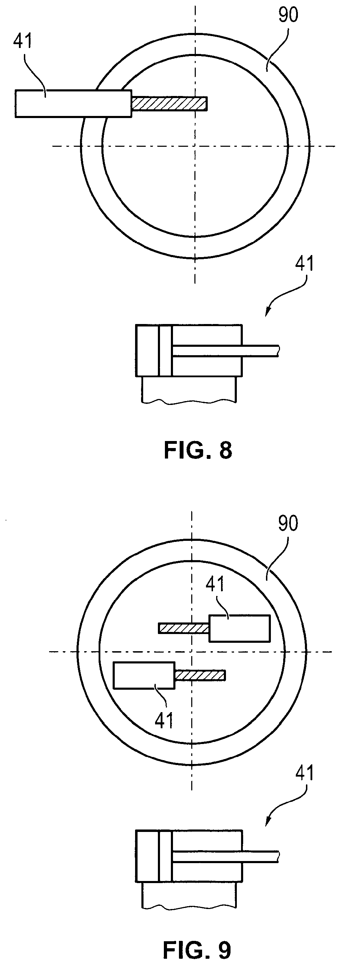

Im Übrigen ist die hydraulische Verstelleinheit 140 analog der Verstelleinheit 40 gemäß Fig. 6 aufgebaut. Auch hier ist als Hydrauliksystem ein Tank 149, eine Pumpe 146 und ein Steuerblock mit Ventil 145 vorgesehen. Ebenso wird die Pumpe 146 mittels eines Motors 147 angetrieben, wobei Pumpe 146 und Motor 147 als Elektromotor-Pumpen-Einheit bezeichnet werden können und wobei der Motor 147 über die Steuerung 148 angesteuert wird. Ebenso wie beim Tank 49 gemäß hydraulischer Verstelleinheit 40 aus Fig. 6 ist auch hier ein Federdruck X vorgesehen, so daß keine Luft in den Hydraulikkreislauf der hydraulischen Verstelleinheit 140 gelangen kann. Die Figuren 8 bis 11 zeigen Anordnungsvarianten der Zylinder 41 bzw. 141 der hydraulischen Verstelleinheiten 40 bzw. 140.

In Fig. 8 ist eine erste Variante gezeigt, bei der ein Differentialzylinder 41 eingesetzt wird und die durch den Differentialzylinder 41 erzeugbare Axialbewegung über eine nicht näher dargestellte Anlenkplatte, die am Großwälzlager 90, das das Blattlager 90 des Rotorblattes 11 ist, in eine Rotationsbewegung gewandelt wird. Wie sich dies aus Fig. 8 ergibt, ist dabei der Hubweg des Differentialzylinders 41 bzw. des Kolbens dieses Differentialzylinders 41 so zu wählen, daß der gesamte gewünschte Blattverstellbereich von 0° bis 90° vollständig durchfahren werden kann.

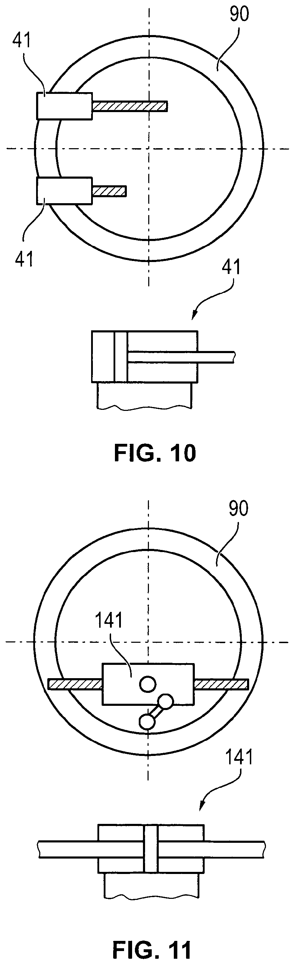

Sollte es notwendig sein, Differentialzylinder mit geringerer Einbaulänge einzusetzen, so kann wie dies in Fig. 9 gezeigt ist, eine weitere Variante dahingehend gewählt werden, daß zwei Differentialzylinder 41 gewählt werden. Diese können, wie in Fig. 9 gezeigt, gleichläufig angeordnet sein, oder aber, wie in Fig. 10 gezeigt, gegenläufig angeordnet sein.

Bei Anordnung gemäß Fig. 10 ist eine hydraulische Verschaltung wie folgt von Vorteil: Der Kolbenraum 42 des einen Differentialzylinders 41 ist jeweils mit dem Ringraum 43 des anderen Differentialzylinders 41 hydraulisch verbunden. Sie wandeln zusammen die Axialbewegung über eine nicht näher dargestellte Anlenkplatte am Blattlager 90 in eine Rotationsbewegung des Rotorblattes 11 um. Hauptvorteil dieser hydraulischen Verschaltung ist die Vermeidung von Differenzölvolumen. Somit kann der für die hydraulische Verstelleinheit 40 benötigte Tank 49 minimiert werden, was sich vorteilhaft auf Baugröße und Gewicht auswirkt.

Eine weitere Ausführungsform besteht darin, einen Gleichlaufzylinder 141 wie in Fig. 11 gezeigt einzusetzen. Infolge des Ein- und Ausfahrens der Kolbenstangenenden 144, 144', die jeweils an Anlenkpunkten bzw. Anlenkplatten des Großwälzlagers 90 angelenkt sind, kann eine Verstellung des nicht näher dargestellten Rotorflügels 11 (vgl. Fig. 1 und 2) ebenso wie bei den Ausführungsformen gemäß Fig. 8 bis 10 erfolgen. Die Kolbenstangenenden 144 und 144' sind an Anlenkpunkten am feststehenden Teil des Großwälzlagers 90 fixiert. Infolge des Hin- und Herfahrens des Zylinders 150 (vgl. Figur 7) kann über eine Koppel oder einen Zapfen eine Verstellung des nicht näher dargestellten Rotorflügels 11 (vgl. Fig. 1 und 2) erfolgen. Mit Hilfe der Koppel wird die Axialbewegung des Zylinders 150 über eine nicht näher dargestellte Anlenkplatte am Blattlager 90 in eine Rotationsbewegung des Rotorblattes 11 gewandelt.

Mit Hilfe des Zapfens wird die Axialbewegung des Zylinders 150 über eine nicht näher dargestellte Kulisse am Blattlager 90 in eine Rotationsbewegung des Rotorblattes 11 gewandelt.

Daraus ergeben sich insbesondere die folgenden Vorteile: Die beiden Kolbenräume 142 und 143 sind gleich groß und es entsteht kein Differenzölvolumen. Somit kann der für die hydraulische Verstelleinheit 40 benötigte Tank 49 minimiert werden, was sich vorteilhaft auf Baugröße und Gewicht auswirkt.

Die Ölversorgung kann wahlweise über den Zylinder 150 oder die feststehenden Kolbenstangenenden 144 und 144' erfolgen.

Die Einbaulage des Gleichlaufzylinders 141 ist unabhängig von der Drehrichtung des Rotorblattes 11, da er beidseitig die gleiche Kraft besitzt.

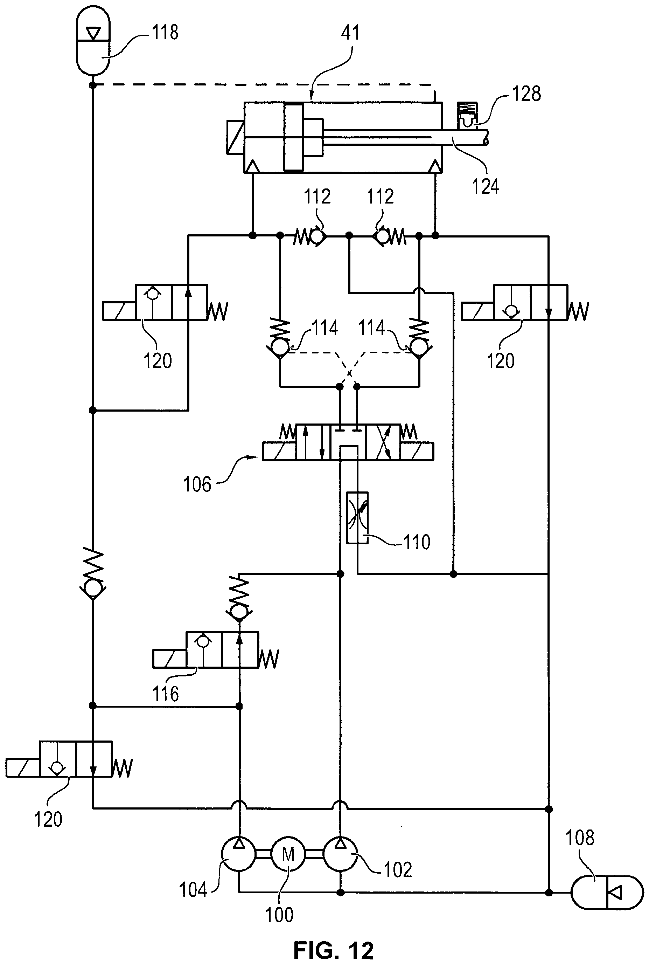

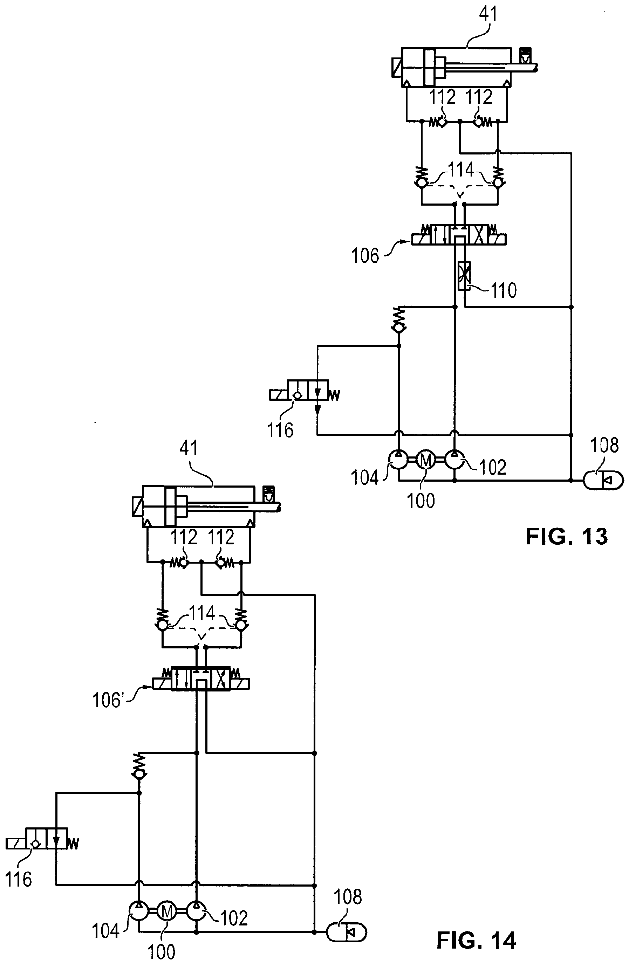

In Figur 12 ist das gesamte Hydraulikschema des elektrohydraulischen Antriebs gezeigt. Die Figuren 13, 14 und 15 zeigen jeweils Details dieses Hydraulikschemas. Anhand dieser Detaildarstellungen wird die Funktion des Hydraulikschemas näher erläutert. Die Figuren 13 und 14 dienen zunächst der Beschreibung der Steuerung bzw. Regelung des Differentialzylinders 41. Zur Druckerzeugung dient ein Elektromotor 100, der ein ungeregelter Elektromotor mit nur einer Drehrichtung ist. Dieser treibt eine erste Pumpe 102 und bei Bedarf eine weitere Pumpe 104 an. Es können auch, in hier nicht näher dargestellter Art und Weise noch weitere Pumpen angetrieben werden. Die Verwendung mehrerer Pumpen 102, 104 ermöglicht eine Aktuatorverstellung mit unterschiedlichen Verstellgeschwindigkeiten, wodurch das Motorantriebsmoment bei hohen Lasten reduziert werden kann. Bei hohen Lasten wird hier nur mit einer Pumpe verfahren. Zur Limitierung der Laufgeschwindigkeit unter Zuglast ist zwischen einem 4-3-Wegeventil 106 und einem Niederdrucktank 108 ein Stromregelventil 110 integriert. Die Regelung der Aktuatorposition erfolgt über das 4-3-Wegeventil 106. Zwischen dem Differentialzylinder 41 und dem als Steuerventil dienenden 4-3-Wegeventil 106 ist optional ein Lasthalteventil zwischengeschaltet, um im Härtefall die Leckage des Differentialzylinders 41 zu minimieren.

Mit 112 sind Rückschlagventile, die mit dem Reservoir 108 verbunden sind, bezeichnet. Mit 114 sind entsperrbare Rückschlagsventile bezeichnet. 116 ist ein 2-2-Sitzventil.

In Figur 14 ist eine Ausführungsform gezeigt, die geringfügig von derjenigen gemäß Figur 13 unterschieden ist. Anstelle des in der Ausführungsform gemäß der Figur 13 verwendeten 4-3-Wegeventils 106 in Kombination mit einem Stromregelventil 110 ist in der Ausführungsvariante gemäß Figur 14 ein 4-3-Wege-Proportionalventil oder -Servoventil eingesetzt. Somit kann ein sanfteres Schaltverhalten, welches bei hohen Massenträgheiten des Flügels erforderlich sein kann, und eine Limitierung der Laufgeschwindigkeit über definierte Regelalgorithmen realisiert sein.

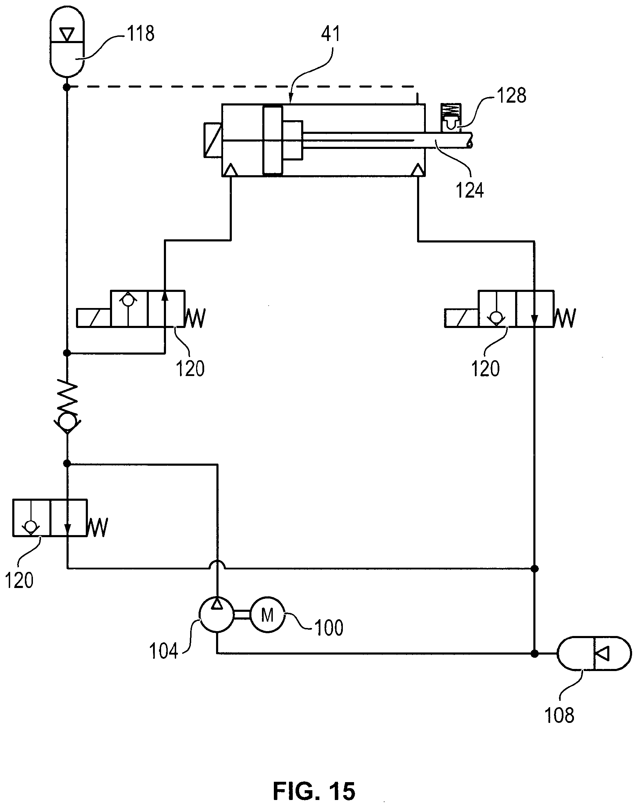

Figur 15 zeigt den Teil des Hydraulikschemas, der für das Backup-System und die Verriegelung zuständig ist.

Wie der Figur 15 zu entnehmen ist, ist ein Hochdruckspeicher 118 über eine Pumpe 104, die über den Elektromotor 100 angetrieben wird, aufladbar. Die 2-2-Sitzventile 120 sind zu 100 % bestromt. Mit dem hier dargestellten Backup-System sind Verriegelungsbolzen gekoppelt, so daß diese erst öffnen, wenn der Hochdruckspeicher auf Betriebsdruck vorgespannt ist.

Bei Verlust von elektrischer Energie wird der Hochdruckspeicher über ein 2-2-Wegesitzventil 120 mit der Ausfahrkammer und die Einfahrkammer 2-2-Wegesitzventil 120 über ein anderes mit dem Tank 108 verbunden. Somit wird der Zylinder automatisch ausgefahren und in der sogenannten "Fahnenstellung" positioniert. Mit Abfall des Druckniveaus im Hochdruckspeicher 118 werden entsprechende Verriegelungsbolzen abgesenkt.

Das aus den Teilhydraulikschemata gemäß der Figuren 13 bzw. 14 und 15 zusammengesetzte Gesamthydraulikschema nach Figur 12 ermöglicht also, daß zur Druckerzeugung ein ungeregelter Elektromotor ohne Leistungselektronik benutzt wird, welcher nur eine Drehrichtung besitzt. Eine Drehrichtungsumkehr des Elektromotors ist nicht erforderlich, da zur Fahrtrichtungsumkehr des Hydraulikzylinders ein entsprechendes Ventil 106 vorgesehen sind. Verschiedene Verstellgeschwindigkeiten des mindestens einen Hydraulikzylinders werden durch hydraulisches Zu- oder Wegschaltens von mindestens einer zusätzlichen Pumpe realisiert. Sollte eine kontinuierliche Verstellung notwendig sein, kann das Ventil 106 durch ein Proportionalventil ersetzt werden. Hierdurch kann auf die Leistungselektronik verzichtet werden.

Im Gegensatz zu anderen bekannten Aktuatoren ist der hier verwendete Aktuator mit einer Verriegelung ausgestattet, wodurch die sonst übliche externe Verriegelung entfallen kann. Das Lösen der Verriegelung ist direkt gekoppelt mit dem Druck eines Notspeichers 118, wodurch sichergestellt ist, daß das System nur in Betrieb gehen kann, wenn der Notspeicher auf maximalen Druck aufgeladen ist. Auf ein zusätzliches Ventil kann hier verzichtet werden. Um den Energiebedarf zu reduzieren, wird mittels eines 4-3-Wegeventils 106 (im Gegensatz zu anderen bekannten Systemen) immer eine Zylinderkammer des Stellzylinders 41 direkt mit der Pumpe 102 und der andere mit dem Reservoir 108 verbunden. Zur Regelung unterschiedlicher Geschwindigkeiten werden zwei oder mehr Pumpen 102, 104, welche vom selben Motor 100 angetrieben werden, verwendet. Über schaltbare Bypass-Ventile werden diese bei Bedarf zu- oder abgeschaltet. Um die Spitzenlast zu senken, werden die zusätzlichen Pumpen nur zugeschaltet, wenn die anliegende äußere Last unter einem definierten Wert liegt. Die Regelung kann entweder weg- oder druckabhängig erfolgen.

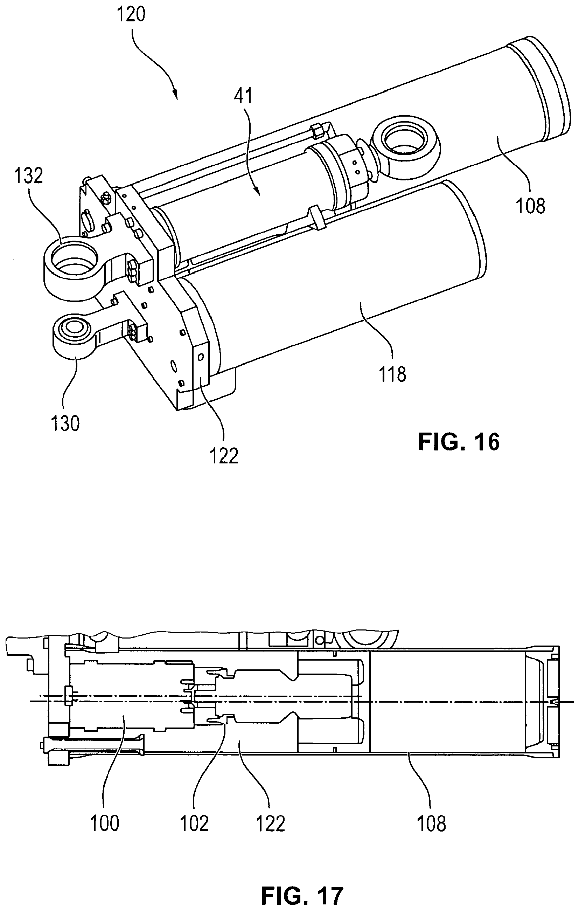

In den Figuren 16 und 17 ist die Bauform eines elektrohydraulischen Aktuators 120 gemäß der vorliegenden Erfindung gezeigt. Die einzelnen Elemente sind hier auf einer zentralen Ventilplatte 122 montiert bzw. über diese miteinander verbunden. In der Darstellung gemäß Figur 16 ist der Tank 108 und der Speicher 118 gezeigt.

In der Schnittdarstellung gemäß Figur 17 ist der Tank 108, in dem Hydraulikfluid 122 unter Druck steht, gezeigt, wobei in diesem der Elektromotor 100 und die Hydraulikpumpe 102 unmittelbar eingebaut sind. Aufgrund dieser Bauweise ist der Motor 100 ölgekühlt und kann somit kleiner bauen.

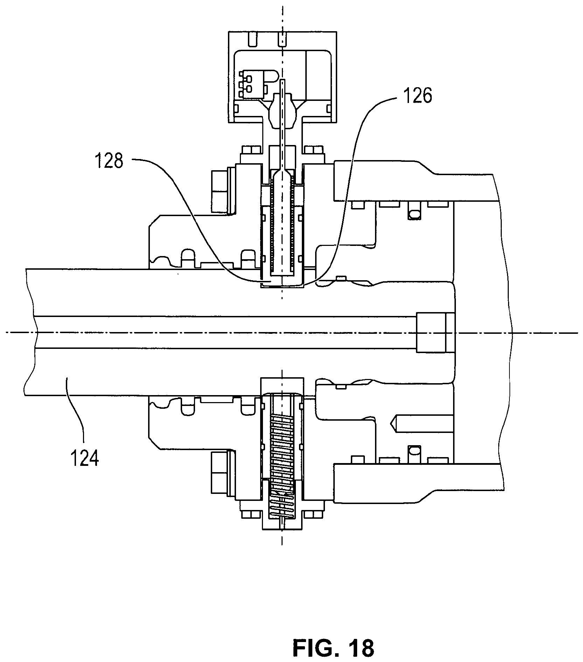

Aus der Figur 18 ist ein weiteres Detail zu sehen. Hier ist eine Schnittdarstellung durch die Kolbenzylinderanordnung 41 gezeigt. Wie hier ersichtlich, ist in der Kolbenstange 124 eine Vertiefung 126 ausgenommen, in welcher ein Verriegelungsbolzen 128 eingreifen kann. Am Verriegelungsbolzen ist zusätzlich ein Positionserkennungssystem bestehend aus einem Sensor und einem Schalter vorgesehen, welches die Lage des Verriegelungsbolzens 128 erfaßt. Hierdurch ist sichergestellt, daß die Anzeige für den verriegelten Zustand nur dann erfolgt, wenn der Zylinder sich wirklich in einer sicheren Stellung befindet.

Wie aus der Figur 16 zu ersehen ist, ist auf der Bodenseite der Ventilplatte 122 ein zusätzliches Stützlager 130 vorgesehen, um ein Taumeln des Aktuators 120 beim Umlaufen der hier nicht näher dargestellten Rotor zu verhindern. Das Stützlager 130 ist mit geringer Steifigkeit ausgestattet, wodurch sichergestellt wird, daß die Axialkräfte des Zylinders über das Hauptlager 132 in die Rotorstruktur eingeleitet werden, während das Stützlager nur die Komponenten der Gewichts- und/oder Massenkräfte aufnimmt, die ein Drehmoment um die Achse des Hydraulikzylinders hervorrufen.

## Patentansprüche

1. Windenergieanlage (10) mit wenigstens einem Pitchverstellsystem (40) zur Verstellung des Pitches wenigstens eines Rotorflügels (11) der Windenergieanlage (10), wobei das Pitchverstellsystem (40) wenigstens einen elektrohydraulischen Antrieb mit wenigstens einem Hydraulikzylinder (41), wenigstens einem Hydraulikspeicher, wenigstens einem Stellventil, wenigstens einer Elektromotor-Pumpen-Einheit (100, 104) und wenigstens einer Steuereinheit aufweist, bei dem mindestens die hydraulischen Bauteile, einschließlich des mindestens einen Hydraulikzylinders (41) und des mindestens einen Hydraulikspeichersr (118), in einem Gerät zusammengefaßt sind und in dem oder am Rotor der Windenergieanlage (10) angeordnet sind,
**dadurch gekennzeichnet,**
**daß** der elektrohydraulische Antrieb zur Druckerzeugung zumindest einen nur in eine Drehrichtung drehenden, ungeregelten Elektromotor (100) aufweist.

2. Windenergieanlage (10) nach Anspruch 1, **dadurch gekennzeichnet, daß** der Hydraulikzylinder (41) des elektrohydraulischen Antriebs eine Verriegelung derart aufweist, daß mindestens ein Verriegelungsbolzen (128) in mindestens eine Vertiefung in der Kolbenstange (124) eingreift.

3. Windenergieanlage (10) nach Anspruch 2, **dadurch gekennzeichnet, daß** der mindestens eine Verriegelungsbolzen (128) mit einem Positionserkennungssystem zur Erfassung seiner Lage versehen ist.

4. Windenergieanlage (10) nach einem der Ansprüche 2 oder 3, **dadurch gekennzeichnet, daß** der Mechanismus zum Lösen der Verriegelung derart direkt mit dem Druck eines Hydraulikspeichersr (118) gekoppelt ist, daß das Lösen der Verriegelung nur dann erfolgt, wenn der Hydraulikspeicher (118) auf einen vorgegebenen Druck aufgeladen ist.

5. Windenergieanlage (10) nach einem der Ansprüche 1 - 4, **dadurch gekennzeichnet, daß** zur Einstellung unterschiedlicher Verstellgeschwindigkeiten mindestens zwei von einem Motor (100) angetriebene Pumpen (102, 104) vorgesehen sind, die über schaltbare Bypaßventile zu- bzw. abschaltbar sind.

6. Windenergieanlage (10) nach Anspruch 5, **dadurch gekennzeichnet, daß** die mindestens eine weitere Pumpe (104) nur dann zugeschaltet wird, wenn die anliegende äußere Last unter einem vorgegebenen Schwellwert liegt.

7. Windenergieanlage (10) nach einem der Ansprüche 1 - 6, **dadurch gekennzeichnet, daß** beim Verfahren des Stellzylinders (41) eine Zylinderkammer mit der Pumpe verbunden ist, während die andere Zylinderkammer mit dem Reservoir verbunden ist.

8. Windenergieanlage (10) nach einem der Ansprüche 1 - 7, **dadurch gekennzeichnet, daß** mindestens ein Speicher (118) zum Verfahren des mindestens einen Flügels (11) in eine sichere Stellung auf ein gegenüber dem Druckniveau des Hydrauliksystems erhöhten Druck aufgeladen ist.

9. Windenergieanlage (10) nach einem der Ansprüche 1 - 8, **dadurch gekennzeichnet, daß** alle hydraulischen Bauteile des elektrohydraulischen Aktuators auf einer zentralen Ventilplatte angeordnet oder zumindest über diese miteinander hydraulisch verbunden sind.

10. Windenergieanlage (10) nach einem der Ansprüche 1 - 9, **dadurch gekennzeichnet, daß** sowohl der Elektromotor (100) wie auch die Hydraulikpumpe (102, 104) im vorgespannten Tank des Hydraulikspeichersr (118) eingebaut sind.

11. Windenergieanlage (10) nach einem der Ansprüche 1 - 10, **dadurch gekennzeichnet, daß** am elektrohydraulischen Aktuator bodenseitig ein zusätzliches Stützlager mit geringer Steifigkeit derart ausgebildet ist, daß die Axialkräfte des Hydraulikzylinders (41) des Aktuators über das Hauptlager in die Nabenstruktur eingeleitet werden, wobei das zusätzliche Stützlager nur die Komponenten der Gewichts- und/oder Massenkräfte aufnimmt, die ein Drehmoment um die Achse des Hydraulikzylinders (41) hervorrufen.

12. Windenergieanlage (10) nach einem der vorhergehenden Ansprüche, **dadurch gekennzeichnet, daß** die Windenergieanlage (10) wenigstens zwei Rotorflügel (11) aufweist, die am Rotor angeordnet sind, und/oder daß jedem Rotorflügel (11) jeweils eine hydraulische Verstelleinheit zugeordnet ist.

## Claims

1. A wind turbine (10) comprising at least one pitch adjustment system (40) for adjusting the pitch of at least one rotor blade (11) of the wind turbine (10), wherein the pitch adjustment system (40) comprises at least one electrohydraulic drive with at least one hydraulic cylinder (41), at least one hydraulic reservoir, at least one adjustment valve, at least one electromotor pump unit (100, 104) and at least one control unit, in which at least the hydraulic components including the at least one hydraulic cylinder (41) and the at least one hydraulic reservoir (118) are combined in one device and are arranged in or on the rotor of the wind turbine (10),
**characterized in that**
the electrohydraulic drive comprises at least one unregulated electromotor (100) that rotates in only one direction of rotation for generating pressure.

2. The wind turbine (10) according to Claim 1, **characterized in that** the hydraulic cylinder (41) of the electrohydraulic drive comprises a lock in such a manner that at least one locking bolt (128) engages into at least one recess in the piston rod (124).

3. The wind turbine (10) according to Claim 2, **characterized in that** the at least one locking bolt (128) is provided with a position recognition system for detecting its position.

4. The wind turbine (10) according to one of Claims 2 or 3, **characterized in that** the mechanism for loosening the locking is directly coupled to the pressure of a hydraulic reservoir (118) in such a manner that the loosening of the locking only takes place when the hydraulic reservoir (118) is charged to a given pressure.

5. The wind turbine (10) according to one of Claims 1 - 4, **characterized in that** in order to adjust different adjustment speeds, at least two pumps (102, 104) driven by a motor (100) are provided, which can be cut in and out via switchable bypass valves.

6. The wind turbine (10) according to Claim 5, **characterized in that** the at least one other pump (104) is only cut in if the applied external load is below a given threshold value.

7. The wind turbine (10) according to one of Claims 1 - 6, **characterized in that** during the displacement of the adjustment cylinder (41), one cylinder chamber is connected to the pump while the other cylinder chamber is connected to the reservoir.

8. The wind turbine (10) according to one of Claims 1 - 7, **characterized in that** at least one reservoir (118) is charged to a pressure that is elevated in comparison to the pressure level of the hydraulic system for moving the at least one blade (11) into a secure position.

9. The wind turbine (10) according to one of Claims 1 - 8, **characterized in that** all hydraulic components of the electrohydraulic actuator are arranged on a central valve plate or are at least hydraulically connected to each other via this valve plate.

10. The wind turbine (10) according to one of Claims 1 - 9, **characterized in that** the electromotor (100) as well as the hydraulic pump (102, 104) are built into the pre-tensioned tank of the hydraulic reservoir (118).

11. The wind turbine (10) according to one of Claims 1 - 10, **characterized in that** an additional support bearing with low rigidity is formed on the bottom of the electrohydraulic actuator in such a manner that the axial forces of the hydraulic cylinder (41) of the actuator are introduced via the main bearing into the hub structure, wherein the additional support bearing receives only the components of the forces of weight and/or of mass that bring about a torque about the axis of the hydraulic cylinder (41).

12. The wind turbine (10) according to one of the preceding claims, **characterized in that** the wind turbine (10) comprises at least two rotor blades (11) that are arranged on the rotor and/or that each rotor blade (11) is associated with a hydraulic adjustment unit.

## Revendications

1. Éolienne (10) avec au moins un système de calage de pale (40) pour régler le calage d'au moins une pale de rotor (11) de l'éolienne (10), ledit système de calage de pale (40) comportant au moins un entraînement électro-hydraulique avec au moins un cylindre hydraulique (41), au moins un accumulateur hydraulique, au moins une vanne de régulation, au moins une unité de pompe avec moteur électrique (100, 104) et au moins une unité de commande pour laquelle au moins les composants hydrauliques, y compris au moins un cylindre hydraulique (41) et au moins un accumulateur hydraulique (118), sont regroupés dans un appareil et disposés dans ou sur le rotor de l'éolienne (10),
**caractérisée en ce que**
l'entraînement électro-hydraulique pour produire une pression comporte un moteur électrique (100) non-régulé qui tourne dans un seul sens de rotation.

2. Éolienne (10) selon la revendication 1, **caractérisée en ce que** le cylindre hydraulique (41) de l'entraînement électro-hydraulique comporte un verrouillage de sorte que au moins un boulon de verrouillage (128) s'engrène dans au moins renfoncement dans la tige de piston (124).

3. Éolienne (10) selon la revendication 2, **caractérisée en ce que** l'au moins un boulon de verrouillage (128) est doté d'un système de localisation pour détecter sa position.

4. Éolienne (10) selon l'une des revendications 2 ou 3, **caractérisée en ce que** le mécanisme de déblocage du verrouillage est couplé directement avec la pression d'un accumulateur hydraulique (118) de telle sorte que le déblocage du verrouillage ne sera pas effectué que lorsque l'accumulateur hydraulique (118) est amené à une pression prédéfinie.

5. Éolienne (10) selon l'une quelconque des revendications 1 à 4, **caractérisée en ce que** , au moins deux pompes (102, 104) entraînées par un moteur (100) qui peuvent être connectées voir déconnectées par des soupapes de dérivation commutables sont prévues, afin de régler des vitesses de réglage différentes.

6. Éolienne (10) selon la revendication 5, **caractérisée en ce que** l'au moins une autre pompe (104) n'est connectée que lorsque la charge extérieure appliquée est inférieure à une valeur seuil prédéfinie.

7. Éolienne (10) selon l'une quelconque des revendications 1 à 6, **caractérisée en ce que**, lors du déplacement du cylindre de réglage (41), une chambre du cylindre est reliée à la pompe tandis que l'autre chambre du cylindre est reliée au réservoir.

8. Éolienne (10) selon l'une quelconque des revendications 1 à 7, **caractérisée en ce qu'**au moins un accumulateur (118) est amené à une pression accrue par rapport au niveau de pression du système hydraulique pour déplacer l'au moins une pale (11) dans une position sûre.

9. Éolienne (10) selon l'une quelconque des revendications 1 à 8, **caractérisée en ce que** tous les composants hydrauliques de l'actionneur électro-hydraulique sont disposés sur une plaque de vannes centrale ou au moins reliés entre eux hydrauliquement par l'intermédiaire de cette plaque.

10. Éolienne (10) selon l'une quelconque des revendications 1 à 9, **caractérisée en ce que** le moteur électrique (100) aussi bien que la pompe hydraulique (102, 104) sont montés dans le réservoir précontraint de l'accumulateur hydraulique (118).

11. Éolienne (10) selon l'une quelconque des revendications 1 à 10, **caractérisée en ce qu'**un palier de support supplémentaire avec une rigidité faible est prévu sur l'actionneur électro-hydraulique, côté fond, de telle sorte que les forces axiales du cylindre hydraulique (41) de l'actionneur sont introduites via le palier principal à la structure du moyeu, ledit palier de support supplémentaire n'absorbant que les composants des forces pondérales et/ou massiques qui génèrent un couple autour de l'axe du cylindre hydraulique (41).

12. Éolienne (10) selon l'une quelconque des revendications précédentes, **caractérisée en ce que** l'éolienne (10) comprend au moins deux pales de rotor (11) qui sont disposées sur le rotor et/ou **en ce qu'**une unité de réglage hydraulique est respectivement assignée à chaque pale de rotor (11).
